# EUROPEAN PATENT APPLICATION

(11) **EP 4 503 756 A1**
(43) Date of publication of application: **05.02.2025**
(21) Application number: 23799667.3
(22) Date of filing: 03.05.2023
(51) Int. Cl.: H04W 48/18, H04W 60/04, H04W 8/02

(54) **METHOD AND DEVICE FOR PROVIDING NETWORK SLICE IN WIRELESS COMMUNICATION SYSTEM**

(30) Priority: 04.05.2022 KR 20220055285
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR)
(74) Representative: Gulde & Partner
(86) International application number: PCT/KR2023/006012
(87) International publication number: WO 2023/214786

(57) **Abstract**

The present disclosure relates to a 5G or 6G communication system for supporting higher data transmission rates. An embodiment of the present disclosure proposes a method performed by a terminal in a wireless communication system. A method of a terminal according to an embodiment of the present disclosure may comprise the steps of: transmitting a first registration request message including at least one piece of single-network slice selection assistance information (S-NSSAI) to an access and mobility management function (AMF); receiving, from the AMF, a registration acceptance message including information of rejected S-NSSAI for a tracking area (TA) and information of allowed S-NSSAI; and when a location of the terminal moves from a first TA within a registration area (RA) to a second TA within the RA, transmitting a second registration request message including at least some S-NSSAI of the rejected S-NSSAI to the AMF.

## Description

### [Technical Field]

The disclosure relates to a method and device for providing a network slice in a wireless communication system.

### [Background Art]

5G mobile communication technologies define broad frequency bands enabling high transmission rates and new services and can be implemented in both 'Sub 6 gigahertz (GHz)' bands such as a 3.5 GHz band, and 'Above 6 GHz' millimeter wave (mmWave) bands such as 28 GHz and 39 GHz bands. In addition, it has been considered to implement 6G mobile communication technologies, referred to as Beyond 5G systems, in terahertz (THz) bands such as 95 GHz to 3 THz bands in order to accomplish transmission rates fifty times faster than 5G mobile communication technologies and ultra-low latencies one-tenth of 5G mobile communication technologies.

When the development of 5G mobile communication technologies began, in order to support services and to satisfy performance requirements in connection with enhanced Mobile BroadBand (eMBB), Ultra-Reliable Low-Latency Communications (URLLC), and massive Machine-Type Communications (mMTC), there has been ongoing standardization regarding beamforming and massive Multi-Input Multi-Output (MIMO) for mitigating radio-wave path loss and increasing radio-wave transmission distances in mmWave, supporting operating multiple subcarrier spacings for efficiently utilizing mmWave resources and dynamic operation of slot formats, initial access technologies for supporting multi-beam transmission and broadbands, definition and operation of BandWidth Part (BWP), new channel coding methods such as a Low Density Parity Check (LDPC) code for large amounts of data transmission and a polar code for highly reliable transmission of control information, L2 preprocessing, and network slicing for providing a dedicated network to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-Everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR User Equipment (UE) power saving, Non-Terrestrial Network (NTN) which is a UE-satellite direct communication for providing coverage in unreliable communication with terrestrial networks areas, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture, such as service based architecture or interface, for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks. Thus, it is expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

An embodiment of the disclosure is intended to resolve a situation in which a terminal recognizes an available slice as unusable due to incorrect mapping information during a process of performing a switching of tracking area (TA) in a 3GPP 5G system.

### [Technical Solution]

According to an embodiment of the disclosure, a method performed by a terminal in a wireless communication system is disclosed. The method may include transmitting, to an access and mobility management function (AMF), a first registration request message including at least one single-network slice selection assistance information (S-NSSAI); receiving, from the AMF, a registration accept message including information of allowed S-NSSAIs and information of rejected S-NSSAIs for a tracking area (TA); and in case where a location of the terminal moves from a first TA within a registration area (RA) to a second TA within the RA, transmitting a second registration request message including at least some S-NSSAI of the rejected S-NSSAIs to the AMF.

According to an embodiment, the method may further include receiving information on a network slice supported by the second TA from a base station belonging to the second TA; and including an S-NSSAI for the network slice supported by the second TA among the rejected S-NSSAIs in the second registration request message.

According to an embodiment, the second registration request message may include an indicator requesting not to reject again the S-NSSAI included in the second registration request message.

According to an embodiment, the registration accept message may further include information on rejected S-NSSAIs for each RA.

According to an embodiment of the disclosure, a method performed by an access and mobility management function (AMF) is disclosed. The method may include receiving, from a terminal located in a first tracking area (TA), a registration request message of the terminal including at least one single-network slice selection assistance information (S-NSSAI); transmitting, to the terminal, a registration accept message including information of allowed S-NSSAIs and information of rejected S-NSSAIs for a tracking area (TA); receiving, from a base station included in a second TA to which the terminal moves from the first TA, location information of the terminal and information on S-NSSAIs supportable by the second TA among the rejected S-NSSAIs; and transmitting, to the terminal, a configuration update message including the S-NSSAIs supportable by the second TA among the rejected S-NSSAIs as allowed S-NSSAI information.

According to an embodiment, the method may further include transmitting a subscription information request message of the terminal to a User Data Management (UDM); and receiving subscription information of the terminal from the UDM, wherein the information of allowed S-NSSAIs included in the accept message may be determined based on the registration request message and the subscription information of the terminal.

According to an embodiment, the configuration update message may include an indicator requesting to transmit whether the configuration update message has been received.

### [Advantageous Effects]

In providing a network slice group priority and mapping information between a network slice and a network slice group for slice-based cell reselection of a terminal in a 3GPP 5G system, it prevents the terminal from referencing incorrect mapping information, enables a network operator's policy to be efficiently reflected, and allows a home network operator to control a network slice priority for cell reselection on a per-subscriber basis even in a roaming situation.

### [Description of Drawings]

FIG. 1 illustrates a procedure in which a UE performs a registration request based on slice information supportable per TA.
FIG. 2 illustrates a procedure in which a RAN notifies an AMF based on slice information supportable per TA.
FIG. 3 illustrates a procedure in which a new base station obtains rejected S-NSSAIs for a UE when the UE moves to the new base station.
FIG. 4 is a diagram illustrating a structure of a UE in a wireless communication system according to an embodiment of the disclosure.
FIG. 5 is a diagram illustrating a structure of a network entity that performs a network function according to an embodiment of the disclosure.

### [Mode for Disclosure]

Hereinafter, the operation principle of the disclosure will be described in detail in conjunction with the accompanying drawings. In the following description of the disclosure, a detailed description of known functions or configurations incorporated herein will be omitted when it may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and the manner of achieving them will become apparent through embodiments described below with reference to the accompanying drawings. The disclosure may be, however, embodied in many different forms and should not be construed as being limited to the embodiments set forth herein. Rather, these embodiments are provided so that the disclosure will be thorough and complete and will fully convey the scope of the disclosure to those skilled in the art. The disclosure is only defined by the scope of the appended claims. Throughout the specification, the same reference numerals refer to the same elements.

The disclosure relates to a method and device for supporting various services in a wireless communication system. Specifically, the disclosure describes a technique for supporting various services by managing UE registration to provide network slice(s) that the UE wants to use in a wireless communication system.

In describing the disclosure, a detailed description of known functions or configurations will be omitted when it is determined that the description may make the subject matter of the disclosure unnecessarily unclear. Hereinafter, embodiments of the disclosure will be described in detail with reference to the accompanying drawings.

In the following description, terms to identify access nodes, terms referring to network entities, terms referring to messages, terms referring to interfaces between network entities, terms referring to various kinds of identification information, etc. are examples for convenience of explanation. Thus, the disclosure is not limited to the terms described below, and other terms referring to elements having equivalent technical meanings may be used.

For convenience of explanation below, the names of NFs (e.g., AMF, SMF, NSSF, etc.) are used as objects of exchanging information for access control and status management. However, embodiments of the disclosure can be equally applied even when NFs are actually implemented as instances (respectively, AMF Instance, SMF Instance, NSSF Instance, etc.).

A 5G system (5GS) may be composed of a 5G core network, base stations, and UEs. The 5G core network may be composed of AMF, SMF, UPF, PCF, UDM, NSSF, NWDAF, N3F, etc.

The UE can access the 5G core network through a radio access network (RAN) base station. The access network base station can support a 3GPP access technology (e.g., NR, E-UTRA, etc.) or a non-3GPP access technology (e.g., WiFi, etc.). The UE can be connected to the AMF via an N2 interface through the base station, and can be connected to the UPF via an N3 interface. In addition to the base station, the base station may be referred to as an 'access point (AP)', 'eNodeB (eNB)', '5th generation node (5G node)', 'gNodeB (gNB)', or other terms having equivalent technical meanings. A non-3GPP function (N3F) is a network function (NF) that acts as an N2 interface and N3 interface termination for UEs connected via a non-3GPP access network (e.g., WiFi, etc.) not defined by 3GPP. The N3F can process N2 control plane signaling and N3 user plane packets.

An access and mobility management function (AMF) is a network function (NF) that manages wireless network access and mobility for the UE. A session management function (SMF) is an NF that manages session for the UE, and session information includes QoS information, charging information, and packet processing information. A user plane function (UPF) is an NF that processes user traffic and is controlled by the SMF. A policy control function PCF) is an NF that manages an operator policy for providing services in a wireless communication system. A user data management (UDM) is an NF that stores and manages subscriber information of the UE (UE subscription). A unified data repository (UDR) is an NF that stores and manages data. The UDR can store UE subscription information and provide it to the UDM. In addition, the UDR can store operator policy information and provide it to the PCF. A network data analytics function (NWDAF) is an NF that provides analysis information for the operation of the 5G system. The NWDAF can collect data from UEs, other NFs, or operations, administration and maintenance (OAM) that constitute the 5G system, analyze the collected data, and provide the analysis results to other NFs. A network slice admission control function (NSACF) is an NF that monitors and controls the number of registered UEs and sessions of a network slice that is the target of a network slice admission control (NSAC). The NSACF stores configuration information regarding the maximum number of registered UEs and the maximum number of sessions for each network slice.

For convenience of explanation, the objects exchanging information for access control and status management will be collectively referred to as NFs hereinafter. However, embodiments of the disclosure can be equally applied even when the NFs are actually implemented as instances (respectively, AMF instance, SMF instance, NSSF instance, etc.).

In the disclosure, the instance may refer to a state in which a specific NF exists in the form of software codes and is executable by being allocated physical or/and logical resources from a computing system to perform the function of the NF in a physical computing system, for example, a specific computing system existing on a core network. Therefore, the AMF instance, the SMF instance, and the NSSF instance may each mean that physical or/and logical resources can be allocated and used for AMF, SMF, and NSSF operations from a specific computing system existing on the core network. As a result, the AMF instance, the SMF instance, or the NSSF instance that is allocated and uses physical or/and logical resources for the AMF, SMF, or NSSF operations from a specific computing system existing on the network can perform the same operation as in the case where a physical AMF, SMF, or NSSF device exists. Accordingly, in embodiments of the disclosure, matters described as the NFs (AMF, SMF, UPF, NSSF, NRF, SCP, etc.) may be replaced with NF instances, or conversely, matters described as NF instances may be replaced with the NFs. Similarly, in embodiments of the disclosure, matters described as network slices may be replaced with network slice instances, or conversely, matters described as network slice instances may be replaced with network slices.

According to an embodiment of the disclosure, in the 5G system defined by 3GPP, one network slice may be referred to as single-network slice selection assistance information (S-NSSAI). The S-NSSAI may be composed of a slice/service type (SST) value and a slice differentiator (SD) value. The SST may indicate characteristics (e.g., eMBB, IoT, URLLC, V2X, etc.) of a service supported by the slice. The SD may be a value used as an additional identifier for a specific service indicated by the SST.

The NSSAI may be composed of one or more S-NSSAIs. Examples of the NSSAI may include, but are not limited to, Configured NSSAI stored in the UE, Requested NSSAI requested by the UE, Allowed NSSAI that the UE determined by the NF (e.g., AMF, NSSF, etc.) of the 5G core network is permitted to use, and Subscribed NSSAI to which the UE is subscribed.

The UE can be simultaneously connected to the access network and registered in the 5G system. Specifically, the UE can access the base station and perform a UE registration procedure with the AMF. During the registration procedure, the AMF can determine the Allowed NSSAI available for the UE accessing the base station and allocate it to the UE.

In the 5G system, network slicing technology refers to a technology and structure that enables virtualized, independent, multiple logical networks in a single physical network. In order to satisfy the specialized requirements of the service/application, the network operator constructs a virtual end-to-end network called a network slice to provide a service.

The network slice may be composed of NG-RAN, AMF, PCF, SMF, UPF, etc., and distributed in units of tracking area (TA, which is a concept defined for managing the mobility of UEs in the mobile communication system. One or more base stations may be included in the TA). That is, the network slice can be used only in specific TAs. A cell or NF may be included in one or more network slices.

When the UE transmits a slice (Requested NSSAI) desired in use to the AMF through a network access stratum (NAS, a communication protocol between the UE and the AMF) in the UE registration procedure, and the base station accessed by the UE provides the AMF with the current UE location (e.g., information on the TA to which the UE belongs) through an N2 message, the AMF considers the Requested NSSAI and information on slices supported in the current UE location (i.e., the TA where the UE is currently located) and transmits an allowed slice (Allowed NSSAI), a rejected slice (Rejected S-NSSAI), and a Registration Area (RA) to the UE. Upon receiving the Allowed NSSAI, the UE recognizes that the slices corresponding to the S-NSSAIs in the Allowed NSSAI are available in the RA, when its location is within the RA, determines that the operation of transmitting a message including the corresponding S-NSSAIs to the AMF, etc. (e.g., requesting a PDU session with the S-NSSAI) is possible, and performs these operations. In the case of the Rejected S-NSSAI (specifically, the Rejected S-NSSAI for the RA), the UE recognizes that the slices in the Rejected S-NSSAI are unavailable in the RA, when its location is within the RA, determines that the operation of transmitting a message including the S-NSSAI to the AMF, etc. (e.g., the operation of including the S-NSSAI in the Requested NSSAI of a Registration Request message transmitted to the AMF in the UE registration procedure) is impossible, and does not perform such operations. The Rejected S-NSSAI may include slice identifiers that are not currently supported in the Requested NSSAI.

Since the Rejected S-NSSAI is calculated and provided based on the UE location (i.e., TA) at the time of transmission of the registration procedure request message, and its scope of application is the RA, there may be slices supported in other TA(s) within the RA among slices included in the Rejected S-NSSAI. When the UE is located in the TA that supports one or more of slices included in the Rejected S-NSSAI, it is unnecessary to restrict re-requesting such slices, and thus a method for solving this issue is required. The disclosure proposes a method for solving this.

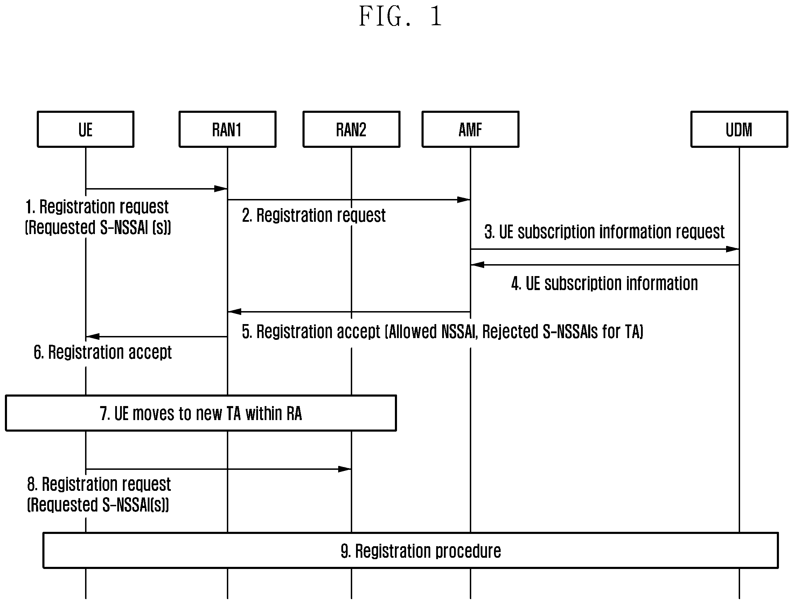

FIG. 1 illustrates a procedure in which a UE performs a registration request based on slice information supportable per TA.

In step 1, the UE can access a base station (RAN) and transmit an AN message (AN parameter, registration request). At this time, the registration request message may contain a UE identifier (a subscription concealed identifier (SUCI), a 5G-globally unique temporary identity (5G-GUTI), or a permanent equipment identifier (PEI), etc.), UE 5G MM Capability, and Requested NSSAI.

The UE 5G MM Capability is information indicating functions supported by the UE, and may include Support of Network Slice AS (Access Stratum) Group (NSAG). The UE that supports the NSAG provides mapping information between slice group identifiers, received from an AMF, from a UE NAS layer to a UE AS layer, and the UE AS utilizes this information to receive information (i.e., information on slice group identifiers supported by each cell or each TA) broadcast from the base station (e.g., gNB or NG-RAN) and thereby can know a set of S-NSSAIs supported by each cell. In addition, the UE that supports the NSAG provides slice priority information, received from the AMF, from the UE NAS layer to the UE AS layer, and the UE AS can perform slice-based cell re-selection based on this information. Meanwhile, in the case where the base station broadcasts the S-NSSAIs supported by each cell or each TA, the UE can receive the broadcasted information and know the set of S-NSSAIs supported by each cell even if it does not support the NSAG.

The Requested NSSAI may include identifiers of network slices that the UE wishes to use (e.g., S-NSSAI 1, S-NSSAI 2).

In step 2, the RAN can select the AMF based on the S-NSSAI information contained in the AN parameter in the AN message received from the UE. The RAN may transmit an N2 message (N2 parameters, registration request) to the selected AMF. The N2 parameter may contain the selected PLMN ID, UE location information (e.g., Tracking Area Identity (TAI) or Cell Id (e.g., TA 1)), UE context request, etc.

In step 3, the AMF can transmit a message requesting UE subscription information to a UDM. At this time, the transmitted message may contain a UE identifier (e.g., SUPI, 5G-GUTI).

In step 4, the UDM can reply, to the AMF, with the UE subscription information corresponding to the UE identifier in the message received from the AMF in step 3. The UE subscription information may contain slice information (subscribed S-NSSAIs) to which the UE has subscribed (e.g., S-NSSAI 1, S-NSSAI 2, S-NSSAI 3, S-NSSAI 4).

Step 5: The AMF can determine the Allowed NSSAI, based on at least one of the Requested NSSAI received in step 2, the subscribed S-NSSAIs received in step 4, and S-NSSAI set or slice group identifier set information supported for each TA (or cell) by the base station received from the RAN or NSSF.

For example, the AMF may check whether the Requested NSSAI (e.g., S-NSSAI 1, S-NSSAI 2) is included in the Subscribed S-NSSAIs (e.g., S-NSSAI 1, S-NSSAI 2, S-NSSAI 3, S-NSSAI 4). The AMF may check whether the Requested NSSAI (e.g., S-NSSAI 1, S-NSSAI 2) is included in the slice information supported in the current location (e.g., TA1) of the UE (e.g., supported S-NSSAIs in TA1: S-NSSAI 1, supported S-NSSAIs in TA2: S-NSSAI 1, S-NSSAI 2). The AMF may determine to include, among the slice(s) included in the Requested NSSAI (e.g., S-NSSAI 1, S-NSSAI2), the slice(s) included in the Subscribed S-NSSAIs (e.g., S-NSSAI 1, S-NSSAI 2, S-NSSAI 3, S-NSSAI 4) and also included in the slice information supported in the current location (e.g., TA1) of the UE (e.g., supported S-NSSAIs in TA1: S-NSSAI 1, supported S-NSSAIs in TA2: S-NSSAI 1, S-NSSAI2), in the Allowed NSSAI (e.g., S-NSSAI 1). The AMF may determine to include, among the slice(s) included in the Requested NSSAI (e.g., S-NSSAI 1, S-NSSAI 2), slice(s) not included in the slice information supported at the current location (e.g., TA1) of the UE (e.g., supported S-NSSAIs in TA1: S-NSSAI 1, supported S-NSSAIs in TA2: S-NSSAI 1, S-NSSAI 2), in the Rejected S-NSSAI for RA (e.g., S-NSSAI 2). Depending on an embodiment, the AMF may determine to include, among the slice(s) included in the Requested NSSAI (e.g., S-NSSAI 1, S-NSSAI 2), slice(s) not included in the slice information supported at the current location (e.g., TA1) of the UE (e.g., supported S-NSSAIs in TA1: S-NSSAI 1, supported S-NSSAIs in TA2: S-NSSAI 1, S-NSSAI 2), in the Rejected S-NSSAI for TA (e.g., S-NSSAI 2) but not include it in the Rejected S-NSSAI for RA. In the case where the UE receives the Rejected S-NSSAI for RA and RA (e.g., S-NSSAI 2), the UE may be prohibited from including the slice within the Rejected S-NSSAI in the Requested NSSAI within the registration request when requesting network registration in the TA within the corresponding RA. In the case where the UE receives the Rejected S-NSSAI for TA (e.g., S-NSSAI 2), the UE may be prohibited from including the slice within the Rejected S-NSSAI in the Requested NSSAI within the registration request when requesting network registration in the TA where the UE is located at the time of transmission of the Registration request (or the TA where the UE is located at the time of reception of the Registration accept message).

The AMF can determine a Registration Area (RA) by considering information received in steps 2 and 4. The RA may be composed of a UE's current location (e.g., TA 1) and adjacent TAs (e.g., TA 1, TA 2) from the UE's current location. In the case where all slices determined to be included in the Allowed NSSAI are supported by all TAs included in the RA, the AMF can finally determine to include the slices, determined to be included in the Allowed NSSAI, in the Allowed NSSAI (e.g., S-NSSAI 1). Meanwhile, if there is a slice among the slices determined to be included in the Allowed NSSAI that is not supported by one or more TAs included in the RA, the AMF can finally determine not to include the corresponding slice in the allowed slices.

The AMF may include a registration accept message in the N2 message transmitted to the RAN (e.g., RAN1), and the registration accept message may contain at least one of Allowed NSSAI, Rejected S-NSSAI for RA, Rejected S-NSSAI for TA, and RA.

In step 6, the RAN may transmit, to the UE, the registration accept message in the N2 message received from the AMF.

The UE may determine the network slice belonging to the Allowed NSSAI (e.g., S-NSSAI 1) in the registration accept message as an available slice in the RA and request a PDU session with the corresponding slice.

In the case of receiving the Rejected S-NSSAI for RA (e.g., S-NSSAI 2), the UE does not include the slice within the Rejected S-NSSAI in the Requested NSSAI within the registration request when requesting network registration in the TA within the RA. On the other hand, in the case of receiving the Rejected S-NSSAI for TA (e.g., S-NSSAI 2), the UE does not include the slice within the Rejected S-NSSAI in the Requested NSSAI within the registration request when requesting network registration in the TA where the UE is located at the time of transmission of the Registration request (or the TA where the UE is located at the time of reception of the Registration accept message).

In step 7, the UE moves to a new TA (e.g., TA2) within the RA. Upon receiving slice information included in information (e.g., SIB message) periodically broadcast by the base station, the UE AS layer can identify slice information (e.g., Supported S-NSSAIs in TA2: S-NSSAI 1, S-NSSAI 2 or Supported slice group identifiers in TA2: slice group id 1) supported per TA (or per cell) based on the received information. At this time, when selecting a cell within the new TA, the UE AS layer may, depending on an embodiment, transmit a list of S-NSSAIs supported in the new cell or TA (a list of slice group identifiers corresponding to S-NSSAIs) to the UE NAS layer. At this time, a TA identifier (i.e., a tracking area code (TAC) or a tracking area identity (TAI)) and/or a cell identifier may be included.

Upon receiving slice information supported in the current TA (or current cell) from the UE AS layer, the UE NAS layer can identify slice information supported in the TA to which the currently selected cell (i.e., the serving cell of the UE) belongs.

In step 8, if the slice information supported by the current TA or the current cell, identified based on the information received from the UE AS layer, includes a slice (e.g., S-NSSAI 2) belonging to the Rejected S-NSSAI for TA, the UE NAS layer may determine to perform a UE registration request by including the slice in the Requested NSSAI. That is, the UE transmits an AN message including a registration request message to the new RAN (i.e., RAN2). At this time, the Requested NSSAI within the registration request may include the slice belonging to the Rejected S-NSSAI for TA. In addition, the Requested NSSAI may also include a slice (e.g., S-NSSAI 1) included in the existing Allowed NSSAI.

Meanwhile, if the slice information supported by the current TA or the current cell, identified based on the information received from the UE AS layer, includes a slice (e.g., S-NSSAI 2) belonging to the Rejected S-NSSAI for RA, the UE NAS layer may determine to perform a UE registration request by including the slice in the Requested NSSAI. That is, the UE transmits an AN message including a registration request message to the new RAN (i.e., RAN2). At this time, the Requested NSSAI within the registration request may include the slice belonging to the Rejected S-NSSAI for RA. In addition, if the Requested NSSAI includes the slice belonging to the Rejected S-NSSAI for RA, an indicator requesting not to reject the slice(s) again may be included. In addition, the Requested NSSAI may also include a slice (e.g., S-NSSAI 1) included in the existing Allowed NSSAI.

In step 9, the UE registration procedure is performed, and the description in the following steps, except for the AMF operation, is the same as that in steps 2 to 6. If there are S-NSSAIs having an indicator requesting not to reject again in the Requested NSSAI, the AMF does not perform slice registration rejection due to the Rejected S-NSSAI for RA that was last provided to the UE (i.e., does not include the corresponding slices in the Allowed NSSAI, but includes them in the Rejected S-NSSAI for RA again).

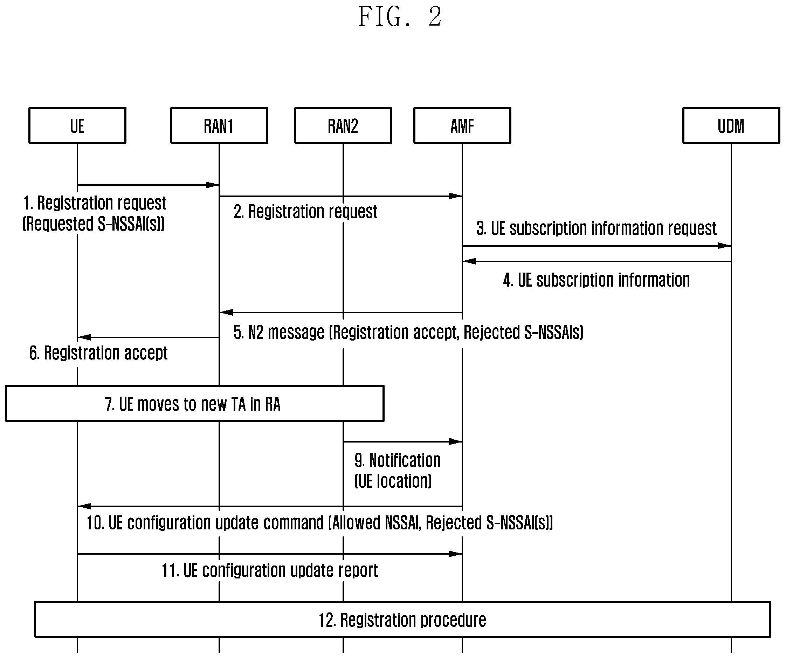

FIG. 2 illustrates a procedure in which a RAN notifies an AMF based on slice information supportable per TA.

In step 1, the UE can access a base station (RAN) and transmit an AN message (AN parameter, registration request). At this time, the registration request message may contain a UE identifier (a subscription concealed identifier (SUCI), a 5G-globally unique temporary identity (5G-GUTI), or a permanent equipment identifier (PEI), etc.), UE 5G MM Capability, and Requested NSSAI.

The UE 5G MM Capability is information indicating functions supported by the UE, and may include Support of Network Slice AS (Access Stratum) Group (NSAG). The UE that supports the NSAG provides mapping information between slice group identifiers, received from an AMF, from a UE NAS layer to a UE AS layer, and the UE AS utilizes this information to receive information (i.e., information on slice group identifiers supported by each cell or each TA) broadcast from the base station (e.g., gNB or NG-RAN) and thereby can know a set of S-NSSAIs supported by each cell. In addition, the UE that supports the NSAG provides slice priority information, received from the AMF, from the UE NAS layer to the UE AS layer, and the UE AS can perform slice-based cell re-selection based on this information. Meanwhile, in the case where the base station broadcasts the S-NSSAIs supported by each cell or each TA, the UE can receive the broadcasted information and know the set of S-NSSAIs supported by each cell even if it does not support the NSAG.

The Requested NSSAI may include identifiers of network slices that the UE wishes to use (e.g., S-NSSAI 1, S-NSSAI 2).

In step 2, the RAN can select the AMF based on the S-NSSAI information contained in the AN parameter in the AN message received from the UE. The RAN may transmit an N2 message (N2 parameters, registration request) to the selected AMF. The N2 parameter may contain the selected PLMN ID, UE location information (e.g., Tracking Area Identity (TAI) or Cell Id (e.g., TA 1)), UE context request, etc.

In step 3, the AMF can transmit a message requesting UE subscription information to a UDM. At this time, the transmitted message may contain a UE identifier (e.g., SUPI, 5G-GUTI).

In step 4, the UDM can reply, to the AMF, with the UE subscription information corresponding to the UE identifier in the message received from the AMF in step 3. The UE subscription information may contain slice information (subscribed S-NSSAIs) to which the UE has subscribed (e.g., S-NSSAI 1, S-NSSAI 2, S-NSSAI 3, S-NSSAI 4).

Step 5: The AMF can determine the Allowed NSSAI, based on at least one of the Requested NSSAI received in step 2, the subscribed S-NSSAIs received in step 3, and S-NSSAI set or slice group identifier set information supported for each TA (or cell) by the base station received from the RAN or NSSF.

For example, the AMF may check whether the Requested NSSAI (e.g., S-NSSAI 1, S-NSSAI 2) is included in the Subscribed S-NSSAIs (e.g., S-NSSAI 1, S-NSSAI 2, S-NSSAI 3, S-NSSAI 4). The AMF may check whether the Requested NSSAI (e.g., S-NSSAI 1, S-NSSAI 2) is included in the slice information supported in the current location (e.g., TA1) of the UE (e.g., supported S-NSSAIs in TA1: S-NSSAI 1, supported S-NSSAIs in TA2: S-NSSAI 1, S-NSSAI 2). The AMF may determine to include, among the slice(s) included in the Requested NSSAI (e.g., S-NSSAI 1, S-NSSAI2), the slice(s) included in the Subscribed S-NSSAIs (e.g., S-NSSAI 1, S-NSSAI 2, S-NSSAI 3, S-NSSAI 4) and also included in the slice information supported in the current location (e.g., TA1) of the UE (e.g., supported S-NSSAIs in TA1: S-NSSAI 1, supported S-NSSAIs in TA2: S-NSSAI 1, S-NSSAI 2), in the Allowed NSSAI (e.g., S-NSSAI 1). The AMF may determine to include, among the slice(s) included in the Requested NSSAI (e.g., S-NSSAI 1, S-NSSAI 2), slice(s) not included in the slice information supported at the current location (e.g., TA1) of the UE (e.g., supported S-NSSAIs in TA1: S-NSSAI 1, supported S-NSSAIs in TA2: S-NSSAI 1, S-NSSAI 2), in the Rejected S-NSSAI for RA (e.g., S-NSSAI 2). In the case where the UE receives the Rejected S-NSSAI for RA and RA (e.g., S-NSSAI 2), the UE may be prohibited from including the slice within the Rejected S-NSSAI in the Requested NSSAI within the registration request when requesting network registration in the TA within the corresponding RA.

The AMF can determine a Registration Area (RA) by considering information received in steps 2 and 4. The RA may be composed of a UE's current location (e.g., TA 1) and adjacent TAs (e.g., TA 1, TA 2) from the UE's current location. In the case where all slices determined to be included in the Allowed NSSAI are supported by all TAs included in the RA, the AMF can finally determine to include the slices, determined to be included in the Allowed NSSAI, in the Allowed NSSAI (e.g., S-NSSAI 1). Meanwhile, if there is a slice among the slices determined to be included in the Allowed NSSAI that is not supported by one or more TAs included in the RA, the AMF can finally determine not to include the corresponding slice in the allowed slices.

The AMF may include a registration accept message in the N2 message transmitted to the RAN (e.g., RAN1), and the registration accept message may contain at least one of Allowed NSSAI, Rejected S-NSSAI for RA, and RA. The AMF may include Rejected S-NSSAI for RA and/or Allowed NSSAI in the N2 message transmitted to the RAN.

In step 6, depending on an embodiment, if the N2 message received from the AMF contains Rejected S-NSSAIs and/or Allowed NSSAIs, the RAN stores them in information (i.e., UE Context) for the corresponding UE.

The RAN may transmit, to the UE, the registration accept message in the N2 message received from the AMF.

The UE may determine the network slice belonging to the Allowed NSSAI (e.g., S-NSSAI 1) in the registration accept message as an available slice in the RA and request a PDU session with the corresponding slice.

In the case of receiving the Rejected S-NSSAI for RA (e.g., S-NSSAI 2), the UE does not include the slice within the Rejected S-NSSAI in the Requested NSSAI within the registration request when requesting network registration in the TA within the RA.

In step 7, the UE moves to a new TA (e.g., TA2) within the RA. In step 8 (not shown), the base station (i.e., RAN2) of the new TA acquires information about the UE (i.e., UE Context) from the previous base station (i.e., RAN1) or the AMF. If there are Rejected S-NSSAIs for RA in the UE Context, and the slice information supported by the current TA or the current cell includes a slice (e.g., S-NSSAI 2) belonging to the Rejected S-NSSAIs for RA, in step 9, the base station (i.e., RAN2) may transmit a message notifying this to the AMF. At this time, this message may include the UE location (i.e., TA identifier or cell identifier), and at least one of the S-NSSAIs supported by the current TA among the slices in the Rejected S-NSSAIs for RA.

In step 10, upon receiving a notification from the RAN2 that there is a slice that is supportable in the current TA among the rejected slices for the UE, the AMF may re-calculate Allowed NSSAI and Rejected NSSAI for RA based on the UE location included in the notification message and transmit to the UE a UE Configuration Update Command transmitted including them. This message may include an indicator requesting the UE to notify the AMF again that it has successfully received the information in the UE Configuration Update Command, and an indicator notifying that the UE performs the network registration procedure again.

Alternatively, upon receiving the notification, the AMF may transmit, to the UE, the UE Configuration Update Command including new Rejected S-NSSAIs for RA excluding slices supported by the current TA or including an indicator indicating to ignore the existing Rejected S-NSSAIs. In this case, this message may include an indicator requesting the UE to notify the AMF again that it has successfully received the information in the UE Configuration Update Command, and an indicator notifying that the UE performs the network registration procedure again.

In step 11, if the message from the AMF in step 10 includes the indicator requesting the UE to notify the AMF that it has successfully received the information in the UE Configuration Update Command, the UE may transmit a message confirming the reception of the information to the AMF.

In step 12, if the message from the AMF in step 10 includes the indicator notifying that the UE performs the network registration procedure again, the UE may perform the network registration procedure again by including the slices, previously included in the Rejected S-NSSAIs for RA, in the Requested NSSAI.

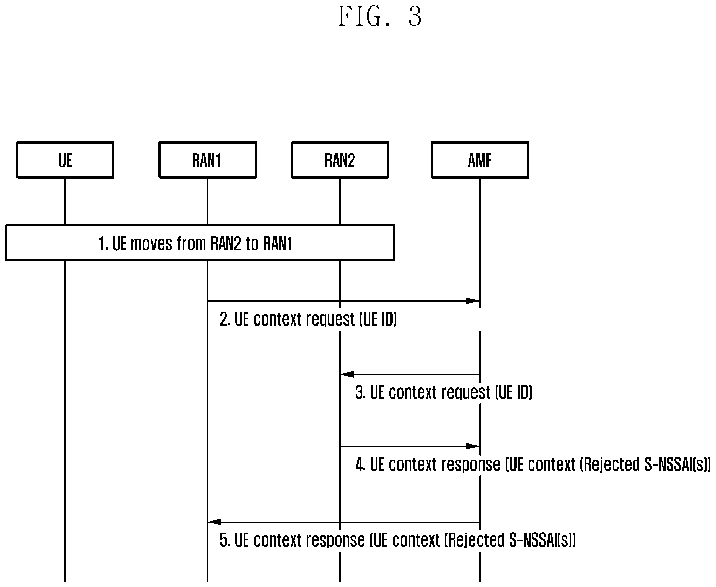

FIG. 3 illustrates a procedure in which a new base station obtains rejected S-NSSAIs for a UE when the UE moves to the new base station.

In step 1, the base station being accessed by the UE is changed from the RAN2 to the RAN1 due to the UE location movement, etc.

In step 2, the new base station RAN1 requests UE Context from the AMF. At this time, a request message may contain a UE identifier. If the UE Context to be provided to the RAN1 has been already stored in the AMF, steps 3 and 4 may be omitted and step 5 may be performed.

In step 3, the AMF can request the UE Context from the previous base station RAN2 for the UE. At this time, a request message may contain the UE identifier.

In step 4, the RAN2 can transmit to the AMF a response message that includes the UE Context containing Rejected S-NSSAIs for the corresponding UE based on the UE identifier received from the AMF.

In step 5, the AMF can transmit to the RAN1 a response message that includes the UE Context containing the Rejected S-NSSAIs. Based on this information, the RAN1 can inform the AMF that there is a slice supported in the new TA among the Rejected S-NSSAIs.

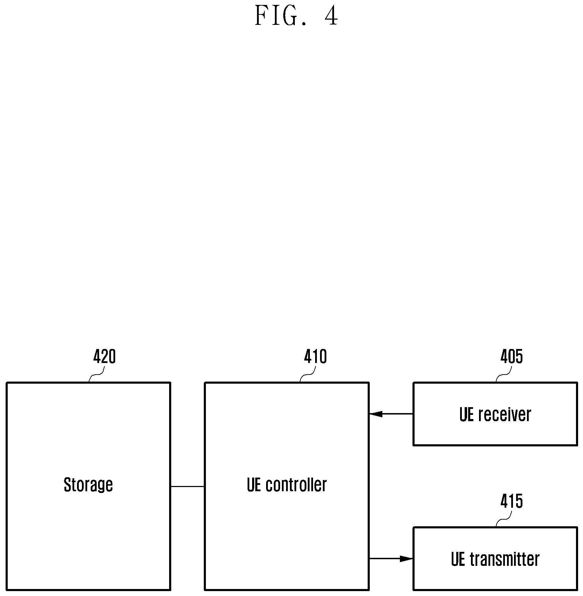

FIG. 4 is a diagram illustrating a structure of a UE in a wireless communication system according to an embodiment of the disclosure. Referring to FIG. 4, the UE may include a transceiver, which refers to a UE receiver 405 and a UE transmitter 415, a storage 420, and a UE controller 410 (or a UE processing unit or a processor). Based on the communication method of the UE described above, the transceiver 405 and 415, the storage 420, and the UE controller 410 of the UE can operate. However, the components of the UE are not limited to the above-mentioned example. For example, the UE may include more or fewer components than the above-mentioned components. In addition, the transceiver, the storage, and the processor may be implemented in the form of a single chip.

The transceiver can transmit and receive signals to and from the base station. Here, the signals may include control information and data. To this end, the transceiver may include an RF transmitter that up-converts and amplifies the frequency of an outgoing signal, an RF receiver that low-noise amplifies an incoming signal and down-converts the frequency, etc. However, this is only one embodiment of the transceiver, and the components of the transceiver are not limited to the RF transmitter and RF receiver.

In addition, the transceiver can receive a signal through a radio channel and output it to the processor, and also transmit a signal output from the processor through the radio channel.

The storage can store programs and data required for the operation of the UE. In addition, the storage can store control information or data included in signals transmitted and received by the UE. The storage may be composed of a storage medium such as a ROM, a RAM, a hard disk, a CD-ROM, and a DVD, or a combination of storage media. In addition, the storage may be plural.

The processor can control a series of processes so that the UE can operate according to the above-described embodiment. The processor may be plural, and the processor can perform a component control operation of the UE by executing a program stored in the storage.

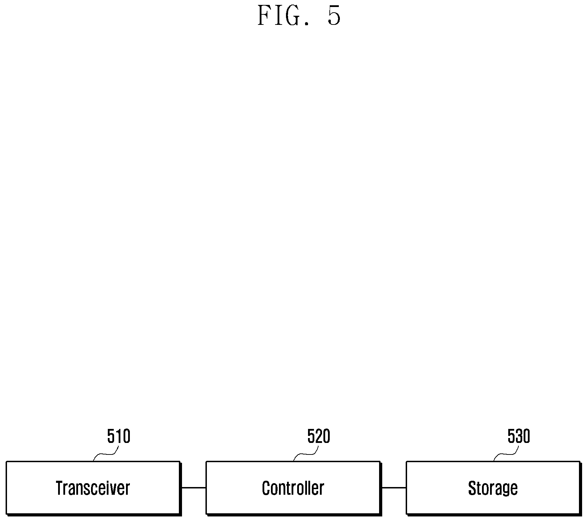

FIG. 5 is a diagram illustrating a structure of a network entity that performs a network function according to an embodiment of the disclosure.

The network entity of FIG. 5 may be one of NWDAF, AMF, SMF, UPF, NSSF, AF, NEF or OAM described above through embodiments of the present invention.

Referring to FIG. 5, the network entity that performs network functions may include a transceiver 510, a controller 520, and a storage 530. In the present invention, the controller may be defined as a circuit or an application specific integrated circuit or at least one processor.

The transceiver 510 can transmit and receive signals to and from other network entities. For example, the transceiver 510 can transmit and receive signals or messages to and from the AMF, which is a network entity that manages the access and mobility of a UE to an access network.

The controller 520 can control the overall operation of the network entity that performs network functions according to the embodiments proposed in the present invention. For example, the controller 520 can control a signal flow between respective blocks to perform operations according to the flowchart described above.

The storage 530 can store at least one of information transmitted and received through the transceiver 510 and information generated through the controller 520.

The methods according to embodiments described in claims or specification of the disclosure may be implemented in the form of hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, local area network (LAN), wide LAN (WLAN), and storage area network (SAN) or a combination thereof. Such a storage device may access the electronic device via an external port. Further, a separate storage device on the communication network may access a portable electronic device.

Various embodiments of the disclosure have been described. The above description of the disclosure is merely for the purpose of illustration, and is not intended to limit embodiments of the disclosure to the embodiments set forth herein. Those skilled in the art will appreciate that other specific modifications and changes may be easily made thereto without changing the technical idea or essential features of the disclosure. The scope of the disclosure should be determined not by the above description but by the appended claims, and all changes and modifications derived from the meaning and scope of the claims and equivalent concepts thereof shall be construed as falling within the scope of the disclosure.

## Claims

1. A method performed by a terminal in a wireless communication system, the method comprising:
transmitting, to an access and mobility management function (AMF), a first registration request message including at least one single-network slice selection assistance information (S-NSSAI);
receiving, from the AMF, a registration accept message including information of allowed S-NSSAIs and information of rejected S-NSSAIs for a tracking area (TA); and
in case where a location of the terminal moves from a first TA within a registration area (RA) to a second TA within the RA, transmitting a second registration request message including at least some S-NSSAI of the rejected S-NSSAIs to the AMF.

2. The method of claim 1, further comprising:
receiving information on a network slice supported by the second TA from a base station belonging to the second TA; and
including an S-NSSAI for the network slice supported by the second TA among the rejected S-NSSAIs in the second registration request message.

3. The method of claim 1, wherein the second registration request message includes an indicator requesting not to reject again the S-NSSAI included in the second registration request message.

4. The method of claim 1, wherein the registration accept message further includes information on rejected S-NSSAIs for each RA.

5. A method performed by an access and mobility management function (AMF) in a wireless communication system, the method comprising:
receiving, from a terminal located in a first tracking area (TA), a registration request message of the terminal including at least one single-network slice selection assistance information (S-NSSAI);
transmitting, to the terminal, a registration accept message including information of allowed S-NSSAIs and information of rejected S-NSSAIs for a tracking area (TA);
receiving, from a base station included in a second TA to which the terminal moves from the first TA, location information of the terminal and information on S-NSSAIs supportable by the second TA among the rejected S-NSSAIs; and
transmitting, to the terminal, a configuration update message including the S-NSSAIs supportable by the second TA among the rejected S-NSSAIs as allowed S-NSSAI information.

6. The method of claim 5, further comprising:
transmitting a subscription information request message of the terminal to a User Data Management (UDM); and
receiving subscription information of the terminal from the UDM,
wherein the information of allowed S-NSSAIs included in the accept message is determined based on the registration request message and the subscription information of the terminal.

7. The method of claim 5, wherein the configuration update message includes an indicator requesting to transmit whether the configuration update message has been received.

8. A terminal operating in a wireless communication system, the terminal comprising:
a transceiver; and
a controller configured to:
transmit, to an access and mobility management function (AMF), a first registration request message including at least one single-network slice selection assistance information (S-NSSAI),
receive, from the AMF, a registration accept message including information of allowed S-NSSAIs and information of rejected S-NSSAIs for a tracking area (TA), and
in case where a location of the terminal moves from a first TA within a registration area (RA) to a second TA within the RA, transmit a second registration request message including at least some S-NSSAI of the rejected S-NSSAIs to the AMF.

9. The terminal of claim 8, wherein the controller is further configured to:
receive information on a network slice supported by the second TA from a base station belonging to the second TA, and
include an S-NSSAI for the network slice supported by the second TA among the rejected S-NSSAIs in the second registration request message.

10. The terminal of claim 8, wherein the second registration request message includes an indicator requesting not to reject again the S-NSSAI included in the second registration request message.

11. The terminal of claim 8, wherein the registration accept message further includes information on rejected S-NSSAIs for each RA.

12. An access and mobility management function (AMF) operating in a wireless communication system, the AMF comprising:
a transceiver; and
a controller configured to:
receive, from a terminal located in a first tracking area (TA), a registration request message of the terminal including at least one single-network slice selection assistance information (S-NSSAI),
transmit, to the terminal, a registration accept message including information of allowed S-NSSAIs and information of rejected S-NSSAIs for a tracking area (TA),
receive, from a base station included in a second TA to which the terminal moves from the first TA, location information of the terminal and information on S-NSSAIs supportable by the second TA among the rejected S-NSSAIs, and
transmit, to the terminal, a configuration update message including the S-NSSAIs supportable by the second TA among the rejected S-NSSAIs as allowed S-NSSAI information.

13. The AMF of claim 12, wherein the controller is further configured to:
transmit a subscription information request message of the terminal to a User Data Management (UDM), and
receive subscription information of the terminal from the UDM,
wherein the information of allowed S-NSSAIs included in the accept message is determined based on the registration request message and the subscription information of the terminal.

14. The AMF of claim 12, wherein the configuration update message includes an indicator requesting to transmit whether the configuration update message has been received.
